# EUROPEAN PATENT APPLICATION

(11) **EP 2 560 082 A1**
(43) Date of publication of application: **20.02.2013**
(21) Application number: 12007676.5
(22) Date of filing: 20.07.2010
(51) Int. Cl.: G06F 3/044, G06F 3/043, G06F 3/041

(54) **Touch-sensing device with a touch hold function and a corresponding method**

(62) Divisional of application: 10290413.3
(71) Applicant: Elo Touch Solutions, Inc., Menlo Park, CA 94025 (US)
(72) Inventor: Aklil, Djamel, 75014 Paris (FR)
(74) Representative: Grünecker, Kinkeldey, Stockmair & Schwanhäusser

(57) **Abstract**

The present invention relates to a touch sensing device with a touch hold function, comprising: an interaction surface, in particular a touch panel, with a sensing means of a touch location determination system for determining a touch position based on an acoustic signal provided on a support; an acoustic isolating means and/or a sealing means being elastically compressive provided between one surface of the interaction surface and the support; and a capacitor provided between the interaction surface and the support, the capacitor comprising a first electrode provided over the one surface of the interaction surface and a second electrode provided over the support. The first electrode and the second electrode are separated by a distance less than a thickness of the acoustic isolating means and/or the sealing means.

## Description

The present invention relates to a touch-sensing device with a touch hold function and a method for assembling the touch-sensing device. The invention also relates to determining whether a touch is followed by a hold or a release action using the touch-sensing device.

A conventional touch-sensing device comprises an interaction surface and a sensing means. When a user touches the interaction surface of a touch-sensing device, the properties of acoustic signals generated during the touch event and sensed by the sensing means can be used to identify the location of the touch event. The acoustic signals, however, fade away after an impact on the interaction surface has occurred, thereby limiting the precision and accuracy with which the duration of a touch event could be detected. This kind of touch event, being defined by the location of the touch and the duration of the touch is also called a touch hold event. The moment at which the touch hold terminates, is also called the touch release event.

It is therefore an object of the present invention to provide a touch-sensing device with a touch location system for determining a touch position based on acoustic signal which can determine a touch hold or touch release event with higher precision and accuracy.

The object of the invention is achieved with a touch-sensing device according to claim 1.

The touch sensing device according to claim 1, comprises an interaction surface, in particular a touch panel, with a sensing means of a touch location determination system for determining a touch position based on an acoustic signal; an acoustic isolating means and/or a sealing means being elastically compressive provided between one surface of the interaction surface and a support; and a capacitor provided between the interaction surface and the support, the capacitor comprising a first electrode provided over the one surface of the interaction surface and a second electrode provided over the support. The first electrode and the second electrode are separated by a distance d less than a thickness D of the acoustic isolating means and/or the sealing means.

According to the invention, advantage is taken of a capacitive technology integrated into the device. A touch or impact on the interaction surface exerts pressure on the surface of the interaction surface. Pressure on the interaction surface causes the acoustic isolating means and/or the sealing means to compress, and thus due to the elastic nature of the acoustic isolating means and/or the sealing means, a decrease in thickness D of the acoustic isolating means and/or the sealing means can be observed. As a consequence, the distance between the electrodes is also reduced due to user's touch on the interaction surface, thus, causing variations in capacitance between the first and second electrode. By monitoring the capacitance value or its variations, a continuous record of external pressures exerted on the interaction surface can thus be obtained. Thus the duration of a touch event can be determined based on the capacitance value, even after the acoustic signal, used for establishing the location of a touch event, has already lapsed.

Consequently, a touch hold action, thus a situation when a user touches the interaction surface at one location for a longer time, can be detected. Thus touch events at a given position can for instance be classified into a short touch event, like a tap or a knock, or into a touch-hold event, for instance exceeding a certain predetermined duration. By monitoring the value or variations in the capacitance, it will also become possible to determine the moment at which the user leaves the interaction means, corresponding to a touch release event.

To improve the sensitivity of the touch hold functionality, the invention proposes to realize a distance d between the electrodes that is less than the thickness D of the acoustic isolating means and/or the sealing means to take advantage of the fact that the capacitance change for a given reduction in electrode distance is the larger the smaller the distance between the electrodes.

According to a preferred embodiment, the first electrode can be electrically connected to a ground potential, in particular connected to the support. By doing so, the capacitance that could occur between a user's hand or a device held by a user, that is typically having a ground potential or at least a potential close to it, approaching the interaction surface and the first electrode can be reduced or even removed, thereby increasing the sensitivity of the capacitance measurement. Further, by connecting the first electrode to the support to achieve ground potential, a simpler device can be realized and noise levels in the capacitance signal can be decreased, thereby increasing the sensitivity and precision of the capacitance measurement.

Alternatively, the touch-sensing device can comprise a conductive layer between the interaction surface and the support, in particular between the interaction surface and the capacitor. In the touch-sensing device according to the invention, the conductive layer can be electrically connected to a ground potential, in particular connected to the support. With such a conductive layer, a capacitance between a user's hand or a device held by a user above the interaction surface and the first electrode which may arise due to the approach of the hand can be reduced or even removed. In addition, noise levels in the capacitance signal can be decreased. Thus, an increase in the sensitivity and precision of the capacitance measurement can be obtained. The conductive layer may only cover the surface of the interaction surface partially.

The touch-sensing device can preferably comprise a first spacing means provided between the interaction surface and the support, in particular between the interaction surface and the capacitor and/or between the capacitor and the support. The first spacing means allows a decreasing of the distance between the first and second electrode compared to the thickness of the acoustic isolating means and/or the sealing means.

According to a preferred embodiment of the touch-sensing device, the first electrode and the second electrode can be separated by one or more second spacing means, such that the first electrode, the second electrode and the one or more second spacing means constitute a capacitor module forming a single unit. By forming such a single unit, the assembly of the touch-sensing device can be simplified.

The capacitor module of the touch-sensing device can further comprise the first spacing means. This configuration allows for an even simpler manufacturing process.

Advantageously, in the touch-sensing device more than one capacitor is provided in particular positioned along an edge of the interaction surface, more in particular one capacitor is positioned at the centre of each edge of the interaction surface. Such a configuration increases the sensitivity of the capacitance measured when compared to the use of a single capacitance situation. Further, by placing a capacitor at the centre of an edge, an increase in sensitivity of the hold determining function can be observed, as the compression of the acoustic isolating means and/or the sealing means are larger at the centre of edges of the interaction surfaces.

Preferably, in the touch-sensing device the first electrode and the second electrode can be provided, in particular printed, on a film, which in particular can be attached to the interaction surface or the support. By providing both the first and the second electrode on one film, the manufacturing process of the touch-sensing device can be simplified. Typically the film is a plastic film.

In the touch-sensing device the film can be bent away from the one surface of the interaction surface or one surface of the support such that the second electrode faces the first electrode to thereby simplify the manufacturing of the device.

The present invention also relates to a bendable film for use in the touch sensing device according to claim 10. The bendable film comprises one or more first electrodes, one or more second electrodes adjacent but spaced apart from the corresponding first electrodes, conductive traces providing electrical connection between at least two first electrodes and between at least two second electrodes, respectively, and a connecting portion.

With the above bendable film, the touch-sensing device can be manufactured with a simplified process steps, thereby reducing manufacturing costs. Further the plurality of electrodes can be reliably and efficiently assembled or replaced.

Preferably, a predetermined area can be cut out between the first electrodes and the second electrodes such that the bendable film can be easily bent to form respective capacitors.

Further preferred, the one or more first electrodes and the one or more second electrodes are provided such on the film, that they are arranged along one or more edges of the interaction surface, in the integrated state.

Preferably, a predetermined area can be cut out from a central portion of the bendable film. Thus the film is only present in the areas of the support or the interaction surface where the capacitor or capacitors are provided.

The bendable film can further comprise an adhesive layer provided at least partially, in particular in an edge region of the film, over the surface of the bendable film to thereby simply the device integration.

The invention also relates to a method to assemble the touch sensing device according to claim 15. Advantageous embodiments of the method are described in the dependant claims 16 to 20.

The use of the bendable film carrying the electrodes of the capacitor as well as the use of a capacitor module simplifies the assembly.

Specific embodiments of the present invention will become more apparent from the present description with reference to the accompanying drawings, wherein
- Figure 1a: illustrates a first example of an embodiment of the present invention, showing a three dimensional partial view of a touch sensing device,
- Figure 1b: illustrates a relationship between capacitance C of capacitor and distance d between capacitor's electrodes,
- Figure 1c: illustrates an inventive method using the first embodiment as illustrated in Figure 1a,
- Figure 2: illustrates a second embodiment of the touch-sensing device according to the present invention,
- Figure 3: illustrates a third embodiment of the invention with a conductive layer provided between the interaction surface and the support,
- Figure 4: illustrates a fourth embodiment of the invention with a capacitor module provided between an interaction surface and a support according to the present invention,
- Figure 5: illustrates a fifth embodiment of the invention with an interaction surface provided with a plurality of capacitors according to the present invention,
- Figure 6: illustrates a sixth embodiment of the invention with a film provided between the interaction surface and support, and
- Figure 7: illustrates a bendable film for use in the touch-sensing device according to the present invention.

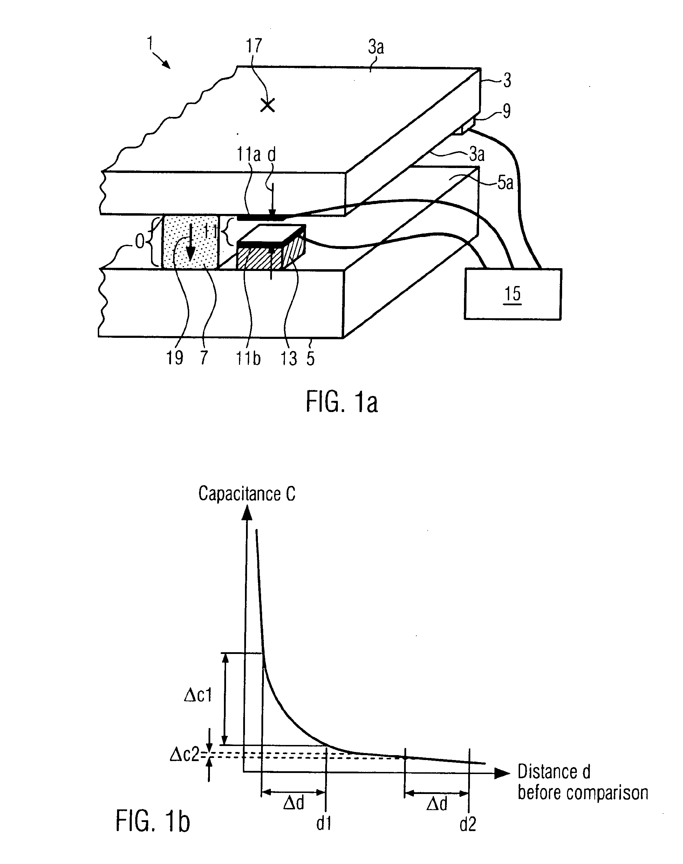

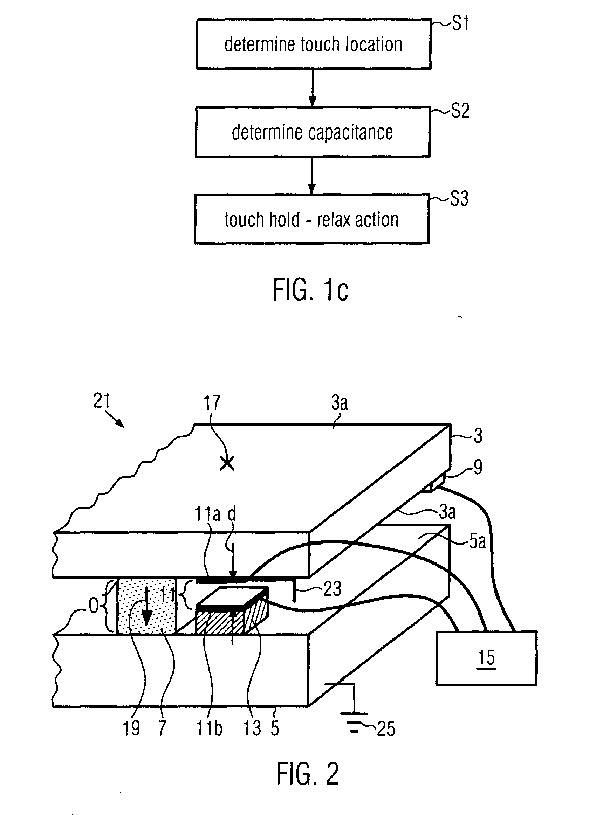

The touch-sensing device 1 according to a first embodiment of the invention, as illustrated in a partial three dimensional view in Figure 1, comprises an interaction surface 3 provided on a support 5. An acoustic isolating means and/or a sealing means 7 is positioned between the interaction surface 3 and the support 5. A sensing means 9 is attached to one surface 3a of the interaction surface 3. Adjacent the acoustic isolating means and/or the sealing means 7 the touch sensing device 1 furthermore comprises a capacitor 11 with a first and second electrode 11 a and 11 b positioned on a first spacing means 13. The sensing means 9 and the capacitor 11 are connected to a touch location determination system 15 configured to determine the location and duration of a touch event that e.g. occurred at location 17 on the interaction surface 3. Such a touch sensing device 1 can be used as a touch screen, but also as a control panel of a machine, like a vending machine, not necessarily needing a display.

The interaction surface 1 can be a glass or plastic panel or the like. Depending on the application in can be transparent or semi-transparent, e.g. when used together with an underlying display or opaque.

The interaction surface 3 is provided with one or more sensing means 9, here acoustic transducers like piezoelectric transducer, which is/are typically attached to the surface side 3a opposite the side 3b where touch events are provided by a user. The transducers 9 are connected to the touch location determination system 15, configured to identify the location of touch 17 based on the properties of the sensed acoustic signals.

The acoustic isolating means 7 between the interaction surface 3 and the support 5 is an elastically compressible gasket having a thickness D and serves to isolate acoustically the interaction surface 3 from the rest of the device 1. In devices for which the acoustic isolation does not play a mature role, a sealing means 7 could be present that prevents moisture, dust, dirt etc from entering the device 1, in particular the space between interaction surface 3 and the support 5. To allow a touch hold functionality, as described further down, the sealing means has also an elastic compressible property.

The acoustic isolating means and/or the sealing means 7 typically runs along the edges of the interaction surface 3. Due to its elasticity, the isolating means will become compressed during a touch event. The thickness D of the acoustic isolating means and/or the sealing means 7 in its relaxed state can range between 0.8 mm to 1.6 mm.

The touch-sensing device 1 of the present invention further comprises the capacitor 11 with its first and second electrode 11 a and 11 b. In this embodiment, the first electrode 11 a is provided on surface 3a of the interaction surface 3. The second electrode 11 b is placed on a first spacing means 13 of a non conducting material, such that the distance d between the electrode 11 a and 11 b is less than the thickness D of the acoustic isolating means and/or the sealing means 7. The electrodes 11 a, 11 b may be formed by a conductive plate, as for example a metallic plate or pieces of copper tape. One or both of the electrodes 11 a, 11 b can be replaced by a wire, more in particular a copper wire or a steel wire. The capacitor 11, in this embodiment is positioned next to the isolating means 7 further towards the edge of the interaction surface 1, but could of course also be positioned towards the inside, in particular when a sealing function has to be fulfilled.

The electrodes 11 a, 11 b of the capacitor 11 are connected to respective input means of the touch location determination system 15, like illustrated in Figure 1. The capacitance of the capacitor 7 is measured by a means for determining the capacitance of the touch location determination system 15.

The role of the capacitor 11 is to allow the determination of the duration of a touch event 17, as the acoustic signals used to determine the location of the touch event 17 fade away after a certain time. Based on a capacitance change, due to a change in the distance between the electrodes 11a and 11b of the capacitor, the hold action can determined. Indeed upon contacting of the interaction surface corresponding to a certain force exerted on the surface, the acoustic isolating means and/or the sealing means 7 changes its thickness therefore also leading to a change in distance d.

Like illustrated in figure 1 a it is therefore preferable that the first electrode 11 a (upper) and the second electrode 11 b (lower) are arranged so that they are substantially perpendicular to the compression direction indicated by arrow 19. Further preferred, the electrodes 11a, 11 b are parallel to the main surface of the interaction surface 1. However, the electrodes 11a, 11b could be implemented in any suitable way, as long as they form a capacitor the capacitance of which changes upon an impact on the touch panel.

According to the invention, a first spacing means 13 is provided on the support 5 so that the first electrode 11 a and the second electrode 11 b are separated by a distance d notably less than the thickness D of the acoustic isolating means and/or the sealing means 7. This has the effect that the sensitivity of the system can be greatly improved. Indeed, as illustrated in Figure 1b, an increased variation in the change of capacitance ΔC1 can be observed for a small distance d1 between electrodes for a given change in distance Δd when compared to the capacitance variation ΔC2 due to the same distance variation Δd but at a larger separation d2 between the electrodes. Indeed, the capacitance C is inversely proportional to distance d between its electrodes.This leads to an increased sensitivity of the touch-sensing device.

The inventive touch-sensing device 1 according to the invention functions the following way, as illustrated in Figure 1c. When a user touches the interaction surface 3 at a given position 17 an acoustic signal, in particular acoustic bending waves, are created which travel through the interaction surface 3. The acoustic signal can thus be captured by the transducers 9 which forward the sensed signals to the processing means of the touch location determining system 15 which analyzes the signals and determines that a touch has occurred and provides the location of the impact 15 according to step S1 illustrated in Figure 1c.

If the user continues to touch the interaction surface 3, no more acoustic signals will be present, as they are formed during the impact on the interaction surface only. However, the touching action by the user still implies a certain pressure on the interaction surfaces which translates into a change of thickness in the acoustic isolating means and/or the sealing means 7. This change in thickness ΔD also leads to a change in the distance Δd between the first electrode 11a and the second electrode 11b leading to a change in the capacitance of the capacitor 11 which will be detected by the means for determining the capacitance being part of the touch location determination system 15 in step S2. Further, as the distance between the first electrode 11 a and the second electrode 11 b is low compared to e.g. the thickness D of the acoustic isolating means and/or the sealing means 7, a large change in the capacitance of the capacitor 11 will be detected.

Based on the determined capacitance value and/or its variation as a function of time, it becomes possible to decide whether the user still touches the interaction surface 3, thus corresponding to a hold action. When the user removes his finger, the acoustic isolating means and/or the sealing means will find again its original thickness value and as a consequence again a capacitance change will be observed so that the touch location determination system 15 can decide that after the hold action a release action has occurred (step S3).

Indeed, an increase in the capacitance is observed when the user touches the interaction surface 3. If the user P keeps holding his touch on the interaction surface 3, thus corresponding to a touch hold action, the capacitance shall have substantially the same value (within a certain predetermined range relating to fluctuations), with respect to the capacitance at the moment of touch, as the distance between the electrodes 7a and 7b remains substantially of the same value with respect to the distance at the moment of touch on the interaction surface 1. Further, when the user releases his touch on the interaction surface 3, the pressure on the interaction surface 3 shall reduce and thus a decrease in the capacitance can be observed. Typically, the capacitance value returns to the value observed before the touch event on the interaction surface 3.

Thus, to identify touch hold events, the touch location determination system can be configured such that in case the capacitance value exceeds a predetermined threshold, a touch hold event is triggered. The threshold value can for example be based on known properties, like thickness, compressibility and dielectric constant of the acoustic isolating means and/or the sealing means 7 and the capacitor 11.

By having a small distance d between the first electrode 11 a and the second electrode 11 b, in particular, less than the thickness D of the acoustic isolating means and/or the sealing means 5, an increased variation in the capacitance can be observed. This gives rise to increased sensitivity and precision of the touch-sensing device 1.

According to a variant of the first embodiment, the first spacing means 13 could also be provided on surface 3a of the interaction surface 3 to lower the electrode 11 a of the capacitor. Eventually a first spacing means could be provided on both the interaction surface as well as the support to reduce the distance between electrodes 11a and 11b.

The second electrode 7b, could be formed by a metallic frame, for example the metallic frame of a display e.g. a LCD device, on which the interaction surface 3 of the present invention, like illustrate in Figure 1, is placed. Eventually the first electrode 11a could also be provided on surface 3a of the interaction surface 3.

Figure 2, illustrates a touch-sensing device 21 according to a second embodiment of the present invention. Features of the touch sensing device 21 that carry the same reference numerals as the touch sensing device illustrated in Figure 1a are not repeated again but reference is made to the description of Figure 1 a.

The difference between the device 21 and device 1 is that the first electrode 11 a in this embodiment is connected electrically 23 to the support 5 which in turn is at ground potential 25. Instead, the first electrode 11 a could also be directly connected to the ground potential.

When the user approaches the touch surface 3b of the interaction surface 3, an additional capacitance between the finger/hand of the user and the first electrode 11a can be observed. The spurious additional capacitance due to approach effect, affects the touch-sensing device and might falsify the analysis of the touch location determination system 15. By connecting the first electrode 11 a to the ground potential, the unwanted spurious capacitance between the finger/hand of the user, which is typically also at ground potential and the first electrode 11a can be nullified or at least reduced.

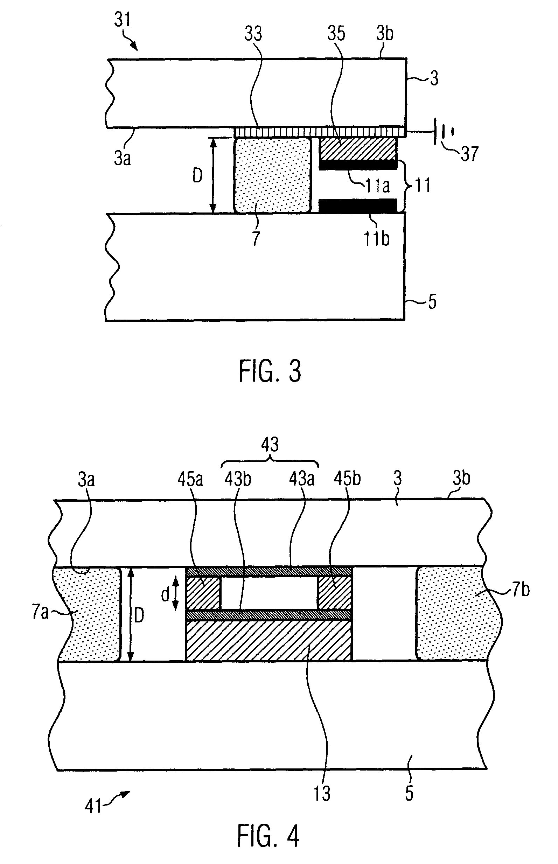

Figure 3, illustrates a cross-sectional view of a touch sensing device 31 according to a third embodiment of the present invention. Features of the touch sensing device 31 that carry the same reference numerals as the touch sensing device illustrated in Figure 1a are not repeated again but reference is made to the description of Figure 1 a.

In this embodiment, a layer 33 is provided between the interaction surface 3 and the support 5. More precisely, the layer 33 is provided between the interaction surface 3 and a first spacing means 35 used to lower the electrode 11 a of the capacitor 11 with respect to the interaction surface 3.

The layer 9 can be made of a conductive material and may be formed by a conductive plate, as for example a metallic plate or pieces of copper tape. The conductive layer 9 can be replaced by a wire, more in particular a copper wire or a steel wire. As illustrated in Figure 3, layer 33 does not have to cover the entire surface side 3a of the interaction surface 3.

The conductive layer 33 is connected electrically to a ground potential 37. This can also be done, for example by connecting the conductive layer 33 to the support 5 which in turn is on ground potential, like in the second embodiment. The electrical connection can be by a wire or any other suitable means. Connecting to the support 5, such as the metallic frame of a display device, to connect to the ground potential decreases the noise level in the capacitance signal and, in addition, removes or at least reduces the approach effect, as described above. Thus an increased sensitivity and precision on the measurement can be observed.

A fourth embodiment of the present invention is illustrated in Figure 4. Features of the touch sensing device 41 that carry the same reference numerals as the touch sensing device illustrated in Figure 1 a are not repeated again but reference is made to the description of Figure 1 a.

In this embodiment, the capacitor 43 is build up in a different way compared to capacitor 11 of the first to third embodiment. Between the first and second electrode 43a and 43b, one or more second spacing means 45a, 45b are provided. Like in the first embodiment, the capacitor is positioned over the first spacing means 13.

In this embodiment, the second spacing means 45a and 45b are provided between respective peripheral edges of the first electrode 43a and the second electrode 43b, but could also fill the entire volume between the first and second electrodes 43a, 43b. The one or more second spacing means 13a and 13b have a thickness d, less than that of the thickness of the acoustic isolating means and/or the sealing means 7a and 7b. The one or more second spacing means 45a, 45b are made out of an elastically compressive dielectric material.

In the fourth embodiment, the first electrode 43a, the second electrode 43b and the one or more second spacing means 45a, 45b eventually together with the first spacing means 13 form a capacitor module that is a single unit. Such a single unit can be provided over the support 5 and between the interaction surface 3 and the support 5. The use of such a module thus simplifies the assembly of the device. Further, the capacitor module can be easily replaced when necessary.

In the touch-sensing device 41 in the fourth embodiment, the capacitor 43 is provided between two acoustic isolating means 7a, 7b, to decouple the interaction surface 3 from the rest of the device, instead of being positioned adjacent the acoustic isolating means and/or the sealing means 7a, 7b and towards the edge or towards the inside.

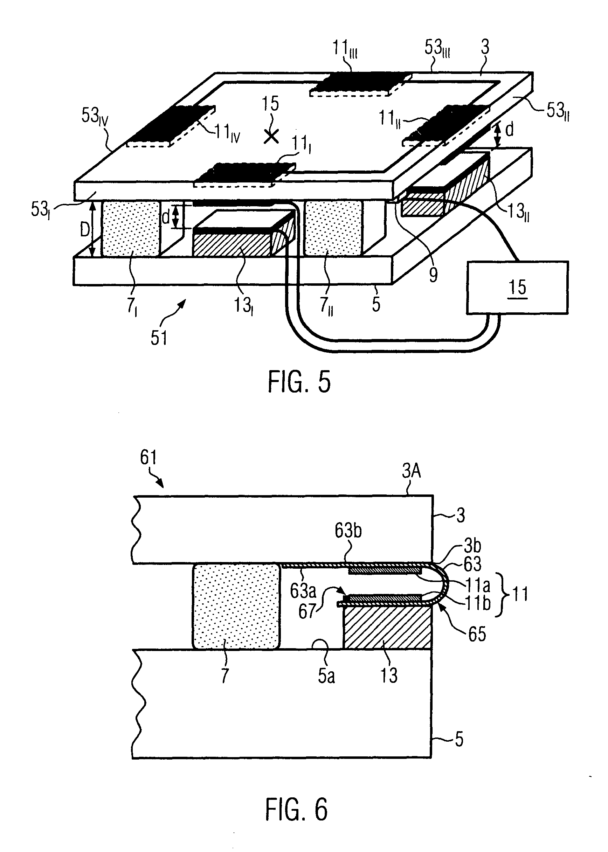

Figure 5 illustrates a fifth embodiment of the present invention. Features of the touch sensing device 51 that carry the same reference numerals as the touch sensing device 1 and 41 illustrated in Figures 1a and 4 are not repeated again but reference is made to the description of Figure 1a.

In this embodiment, the touch-sensing device 51 has a rectangular interaction surface 3 and comprises four capacitors 11_{I}, 11_{II}, 11_{III}, and 11_{IV}, which are built up like illustrated in Figure 1a and are arranged over respective first spacing means 13_{I}, 13_{II}, 13_{III}, and 13_{IV}, In a variant the capacitors could be build up out of the units 43 as illustrated in Figure 4. The acoustic isolating means 7_{I}, 7_{II}, 7_{III}, and 7_{IV} are positioned in the corners.

In this embodiment, the capacitance values of the four capacitors sum up as they are arranged in parallel. This configuration further increases the sensitivity of the touch-sensing device 51 when compared to a single capacitance situation.

In this embodiment, the capacitors are provided at or close to the centre of the edges 53_{I}, 53_{II}, 53_{III}, and 53_{IV} of the interaction surface 3. This is to take advantage of the observation that in most cases the maximum compression of the acoustic isolating means 7 due to a touch event can be observed in the centre region of the edge of the interaction surface 3. Thus, the maximum compression of the acoustic isolating means 5 can lead to an increased sensitivity of the touch-sensing device 51.

If instead of an acoustic isolating means 7 a sealing means 7 is used in the device, the capacitors would still be positioned in the centre of the edges, with the sealing means 7 configured and arranged such that the space between interaction surface 3 and base 5 together with the capacitors is encapsulated.

The touch sensing device 51 according to the fourth embodiment provides four capacitance measurements. The measured capacitance values of the four capacitors 11_{I}, 11_{II}, 11_{III}, and 11_{IV}, can not only be used to determine whether there is a touch hold action but can also provide coarse information about the position of the hold action, based on a comparison of the capacitance values amongst each other. For instance, the change in capacitance can be larger at capacitor 11_{I}, compared to a change at capacitors 11_{II}, 11_{III}, and 11_{IV}, when an impact occurs at touch position 15. This location information can be coarse compared to the resolution which can be provided using the acoustic signals, but by limiting the area at which the precise location must be searched for, computational power necessary to identify the location of the touch event can be reduced.

Alternatively or in addition a confidence value can be attributed to a detected touch location using the acoustic signals. Indeed, if the acoustic and capacitance touch locations are substantially the same, within a certain predetermined confidence limit, a touch hold action detected by the system using the capacitance values can be attributed with more certainty to the touch detected using the acoustic signal, and spurious unwanted effects occurring away from the location of the intentional impact can be filtered out, at least partially.

According to embodiment six of the present invention, as illustrated in Figure 6, the first electrode 11 a and/or the second electrode 11 b of the touch sensing device 61 can be provided on a film 63. Features of the touch sensing device 61 that carry the same reference numerals as the touch sensing device 1 illustrated in Figures 1a and 4 are not repeated again but reference is made to the description of Figure 1a.

The electrodes 11 a and 11 b can be provided over the film 63 by printing, deposition or any other suitable means. For example, the first electrode 11 a can be printed or deposited adjacent to the second electrode 11 b on the film 63 and spaced apart from the first electrode 11 a. The film 63 comprising the first electrode 11 a and the second electrode 11 b is attached to the interaction surface 3 or the support 5/first spacing means 13 and then bent towards the support 5/first spacing means or the interaction surface 3 respectively. After bending the electrodes 11 a and 11 b face each other, the film 63 can be attached or adhered via an adhesive layer, to the interaction surface 3 and/or the support 5. Preferably, the first electrode 11 a and the second electrode 11 b are provided over one surface 63a of the film 63 and the other surface 63b of the film 63 is attached or adhered to the interaction surface 3 and/or the support 5.

The film 63 in this embodiment is provided over the surface 3b or the touch surface 3a of the interaction surface 3. The film 63 in this embodiment is provided between the interaction surface 3 and the first spacing means 13, but could of course also be provided between the support 5 and the first spacing means 13. The film 63 can be provided over the one surface 1 a or the main touch surface 1 b of the interaction surface 1, such that the first electrode 7a or the second electrode 7b is over the peripheral edge of the interaction surface 1. Preferably, the film 63 is only provided partially over the interaction surface 3, like illustrated and/or the support 5, wherein partially means only regions of the film 63 having either the first electrode 11 a or the second electrode 11 b are in contact with the interaction surface 3. The part 65 of the film 63 which is not attached to the interaction surface 3 can extend towards the outside of the device like illustrated in Figure 6 or towards the inside.

The film 63 is made of a non-conductive and bendable material and can be transparent or opaque. The film 107 can be bent such that the second electrode 7b can be substantially parallel to the first electrode 7a, thereby forming the capacitor 7.

The first electrode 11 a and the second electrode 11 b can be connected to the touch location determination system 15 via printed conductive traces 67 on the film 63.

The use of the bendable film 63 simplifies the assembly of the device.

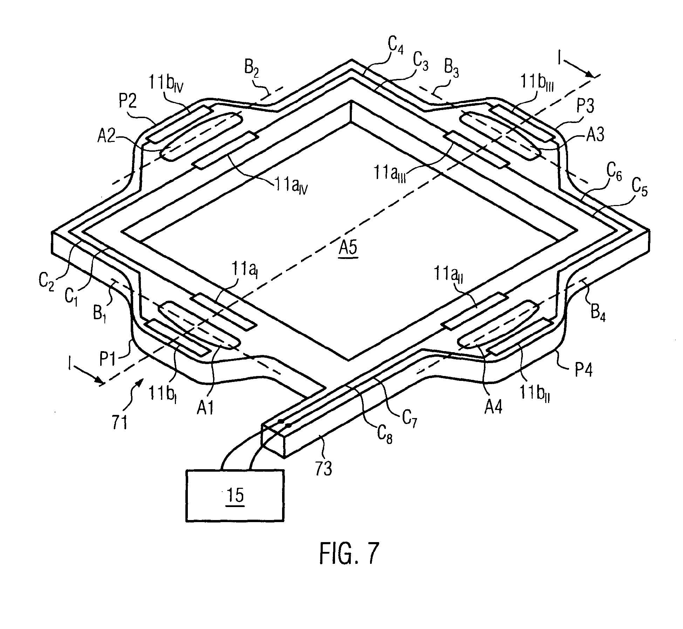

Figure 7 illustrates a bendable film 71 according to a seventh embodiment of the invention. This bendable film 71 can be used in the touch-sensing device as illustrated in Figure 6. Reference numerals used in this figure but already used in figures of the preceding embodiments relate to the same features which will therefore not be described in detail again but reference is made to the above description. Indeed, the bendable film 71 corresponds to the bendable film 63 of the sixth embodiment.

On the film 71 which is out of a non conducting, bendable material, e.g. plastic material, comprises one or more first electrodes, here four first electrodes, 11a_{I}, 11a_{II}, 11a_{III}, and 11a_{IV} and corresponding second electrodes 11b_{I}, 11b_{II}, 11b_{III}, and 11b_{IV}. The bendable film 71 furthermore comprises conductive traces C1-C8. The conductive traces C1-C8 provide an electrical connection between at least two first electrodes 11a_{I}, 11a_{II}, 11a_{III}, and 11a_{IV} and between at least two second electrodes 11b_{I}, 11b_{II}, 11b_{III}, and 11b_{IV}, respectively. In the mount state like illustrated in Figure 6, this will lead to an arrangement of 4 capacitors connected in a parallel way.

As illustrated in Figure 7, the first electrodes 11a_{I} and 11a_{IV} are connected via the conductive trace C1, the first electrodes 11a_{IV} and 11a_{III}, are connected via the conductive trace C3, and the first electrodes 11a_{III} and 11a_{II}, are connected via the conductive trace C5. The first electrode 11 a_{II} can be connected e.g. with the touch location determination means 15 via the conductive trace C7. The first electrodes 11a_{I}, 11a_{II}, 11a_{III}, and 11a_{IV} are thus connected in series via the conductive traces C1, C3, C5, C7.

Similarly, the second electrodes 11b_{I} and 11b_{IV} are connected via the conductive trace C2, the second electrodes 11b_{IV} and 11b_{III}, are connected via the conductive trace C4, and the second electrodes 11 b_{III} and 11b_{II}, are connected via the conductive trace C6. The second electrode 11b_{II} can be connected e.g. with the touch location determination system 15 via the conductive trace C8. The second electrodes 11b_{I}, 11b_{II}, 11b_{III}, and 11b_{IV} are thus connected in series via the conductive traces C2, C4, C6, C8.

To facilitate the connection with the touch location determination system 15, the film 71 comprises a connecting portion 73. In this embodiment, the connecting portion 73 is a protruding part.

During manufacturing of the film 71, the first electrodes, the second electrodes and the conductive traces can be provided in one fabrication step by printing, deposition or the likes.

As illustrated in Figure 7, the film 71 comprises a central cut out region A5 as well as further cut out regions A1 to A4 between the corresponding first and second electrode pairs (11a_{I} and 11b_{I}, 11a_{II} and 11b_{II}, 11a_{II}, and 11b_{III} and 11_{IV} and 11b_{IV}). In addition, the second electrodes 11b_{I}, 11b_{II}, 11b_{III}, and 11b_{IV} are provided on protruding portions P1 to P4 of the film 71. The cut out regions A1 to A4 and the protruding portions P1 to P4 facilitate the bending, along the axis B1 to B4, such that the second electrode faces the first electrode in the mount state as illustrated in figure 6. The cut out region A5 can have any shape or can even be absent.

To be able to attach the film 71 to an interaction surface 3 or a support 5/first spacing means 13, the film 71 furthermore can comprise an adhesive layer which is provided on the side opposite to side with the conductive traces and the electrodes. According to a variant, the adhesive layer can also be on the same side.

In the following, a method for assembling a touch-sensing device according to an embodiment of the present invention will be described.

According to an eight embodiment of the present invention, the assembly method to obtain a touch-sensing device 1 comprises the steps of: Providing a support 5, providing an acoustic isolating means and/or a sealing means 7 on the support, providing a first spacing means adjacent the acoustic isolating means and/or the sealing means 7 on the support 5, providing an electrode 11b on the isolating means 7 and attaching an interaction surface 3 with a first electrode 11 a on the acoustic isolating means and/or the sealing means such that the first and second electrodes 11 a and 11 b face each other to form a capacitor with a distance d separating the first and second electrodes 11a and 11b that is smaller than the one of the acoustic isolating means and/or the sealing means 7. According to a variant the method further more comprises a step of connecting the first electrode 11a to ground potential. According to a further variant the method comprises providing an additional layer 33 on the interaction surface, providing a first spacing means 35 on the additional layer 33 and providing the first electrode 11a on the first spacing means and attaching this intermediate structure to the acoustic isolating means and/or the sealing means 7. In this variant it is also possible to omit the step of providing the first spacing means on the support.

According to a ninth embodiment of the invention, the assembly method comprises the steps of providing a support 5, providing an acoustic isolating means and/or a sealing means 7 on the support, providing a capacitor module as described in relation with the fourth embodiment and illustrated in Figure 4 and providing an interaction surface 3 on the acoustic isolating means and/or the sealing means 7 and the capacitor module.

According to a tenth embodiment of the invention, the assembly method comprises the steps of providing a support 5, providing an acoustic isolating means and/or a sealing means 7, providing a first spacing means 13 on the support 5 adjacent the acoustic isolating means and/or the sealing means 7, attaching via an adhesive layer a bendable film 7 to the first spacing means 13, bending the bendable film to let the first and second electrodes 11 a and 11 b face each other as illustrated in figure 6 and attaching via an adhesive layer the interaction surface 3 to the acoustic isolating means and/or the sealing means 7 and the first electrode 11 a.

The individual features of the various embodiments can be combined independently of each other to reach further variations of the inventive embodiments.

The embodiments of the invention provide the advantage that an increased sensitivity and precision in capacitance measurements can be observed, by providing a capacitor having a distance between the electrodes smaller than a thickness of the acoustic isolating means and/or the sealing means. The measured capacitance variation can be used to characterize hold actions or release action of a touch event, whereas, according to the invention the touch location is determined out of the analysis of acoustic signals generated during the touch event. At the same time there is no need for active components to detect a hold action. The capacitor can be low powered or even self powered, thereby ensuring a touch hold functionality without a notable increase of the power consumption of the device.

## Claims

1. A touch sensing device with a touch hold function, comprising:
an interaction surface (3), in particular a touch panel, with a sensing means (9) of a touch location determination system for determining a touch position,
an acoustic isolating means and/or a sealing means (7) being elastically compressive provided between one surface of the interaction surface and a support; and
a capacitor (11) provided between the interaction surface (3) and the support (5), the capacitor comprising a first electrode (11a) provided over one surface (3a) of the interaction surface (3) and a second electrode (11b) provided over the support (5),
wherein the first electrode (11a) and the second electrode (11b) are separated by a distance less than the thickness (D) of the acoustic isolating means and/or the sealing means,
**characterized in that,**
the first electrode and the second electrode are provided, in particular printed, on a film, which in particular is attached to the interaction surface or the support, and the touch location is determined based on an acoustic signal.

2. The touch sensing device according to claim 1, wherein the first electrode (11a) is electrically connected to a ground potential, in particular connected to the support (5).

3. The touch sensing device according to claim 1, further comprising
a conductive layer (33) between the interaction surface and the support, in particular between the interaction surface and the capacitor,
wherein the conductive layer is electrically connected to a ground potential, in particular connected to the support (5).

4. The touch sensing device according to at least one of claims 1 to 3, further comprising a first spacing means (13) provided between the interaction surface and the support, in particular between the interaction surface and the capacitor and/or between the capacitor and the support.

5. The touch sensing device according to at least one of claims 1 to 4, wherein the first electrode and the second electrode are separated by one or more second spacing means (45a, 45b), such that the first electrode, the second electrode and the one or more second spacing means constitute a capacitor module forming a single unit.

6. The touch sensing device according to claim 5, wherein the capacitor module further comprises the first spacing means (13).

7. The touch sensing device according to at least one of claims 1 to 6,
wherein more than one capacitor (11_{I}-11_{IV}) is provided, in particular positioned along an edge of the interaction surface (3), more in particular one capacitor at the centre of each edge of the interaction surface.

8. The touch sensing device according to claim 1, wherein the film is bent away from the one surface (3a) of the interaction surface (3) or one surface of the support such that the second electrode faces the first electrode.

9. Bendable film for use in a touch sensing device according to at least one of claims 1 to 8, the bendable film comprising:
one or more first electrodes (11a_{I}-11a_{IV}),
one or more second electrodes (11b_{I}-11b_{IV}) adjacent but spaced apart from the corresponding first electrodes,
conductive traces providing electrical connection between at least two first electrodes and between at least two second electrodes, respectively, and
a connecting portion.

10. The bendable film according to claim 9, wherein a predetermined area (A1-A4) is cut out between the first electrodes and the second electrodes.

11. The bendable film according to at least one of claims 9 or 10, wherein the one or more first electrodes and the one or more second electrodes are printed along one or more edges such that in the integrated state they are positioned along the edges of the interaction surface (3).

12. The bendable film according to at least one of claims 9 to 11, wherein a predetermined area (A5) is cut out from a central portion of the bendable film such that the interaction surface (3) or the support (5) can be accommodated under or over said predetermined area in the central portion of the bendable film.

13. The bendable film according to at least one of claims 9 to 12, wherein an adhesive layer is provided at least partially, in particular in an edge region of the film, over the surface of the bendable film.

14. A method for assembling a touch sensing device with a touch hold function comprising the steps of:
a) providing a support (5);
b) providing an interaction surface (3), in particular a touch panel, with a sensing means (9) of a touch location determination system for determining a touch position over the support (5);
c) providing an acoustic isolating means and/or a sealing means (7) between one surface of the interaction surface and the support; and
d) providing a capacitor (11) between the interaction surface and the support, the capacitor comprising a first conducive electrode provided over the one surface of the interaction surface and a second electrode provided over the support;
wherein the first electrode (11a) and the second electrode (11b) are separated by a distance less than a thickness of the acoustic isolating means and/or the sealing means,
**characterized in that,**
the capacitor providing step d) includes a step d1) of providing a bendable film over one surface (3a) of the interaction surface (3) or one surface of the support (5), wherein the bendable film comprises the first electrode adjacent but spaced apart from the second electrode, the first electrode and the second electrode printed on one surface of the bendable film, and the touch location is determined based on an acoustic signal.

15. The method according to claim 14, further comprising a step d2) of bending the bendable film away from the one surface of the interaction surface (3) or the one surface of the support (5) such that the second electrode faces the first electrode thereby forming the capacitor.

16. The method according to claim 14, wherein a first spacing means (13) is provided over another surface of the bendable film and over the second electrode or the first electrode.

17. The method according to claim 14, wherein the capacitor providing step d) includes a step d3) of providing a capacitor module, comprising the first electrode (11 a), the second electrode (11b) and one or more second spacing means (45a. 45b), between the interaction surface (3) and the support (5), wherein the one or more second spacing means is provided between the first electrode and the second electrode.

18. The method according to claim 14, wherein the capacitor module further includes the first spacing means (13) and the first spacing means is placed between the interaction surface and the support, in particular between the interaction surface and the capacitor and/or between the capacitor and the support.
